# EUROPÄISCHE PATENTSCHRIFT

(11) **EP 2 512 773 B1**
(45) Veröffentlichungstag und Bekanntmachung des Hinweises auf die Patenterteilung: **18.02.2015**
(21) Anmeldenummer: 10809225.5
(22) Anmeldetag: 13.12.2010
(51) Int. Cl.: B29C 47/08, B29C 47/22

(54) **VERSTELLBARE DÜSE**
ADJUSTABLE NOZZLE
BUSE RÉGLABLE

(30) Priorität: 15.12.2009 DE 102009058361
(43) Veröffentlichungstag der Anmeldung: 24.10.2012
(73) Patentinhaber: Gross, Heinz, 64380 Roßdorf (DE)
(72) Erfinder: Gross, Heinz, 64380 Roßdorf (DE)
(74) Vertreter: Katscher Habermann Patentanwälte
(86) Internationale Anmeldenummer: PCT/DE2010/001451
(87) Internationale Veröffentlichungsnummer: WO 2011/072650

(56) Entgegenhaltungen:
- EP-A2- 1 023 984
- CH-A- 373 176
- CH-A- 405 682
- DE-A1- 19 829 183
- DE-C1- 4 214 241
- GB-A- 2 237 236
- JP-A- 1 128 821
- US-A- 4 333 896
- US-A- 5 690 971
- US-B1- 6 382 944

## Beschreibung

Die Erfindung betrifft eine Düse für einen Extruder bestehend aus einem Kern und einem mindestens zweigeteilten Gehäuse umfassend einen feststehenden Gehäusegrundkörper und ein Gehäusendteil, an dem die fließfähige Masse die Düse verlässt, wobei das Gehäuse den Kern so umschließt, dass zwischen Kern und Gehäuse ein Fließkanal vorhanden ist, durch den eine fließfähige Masse ausgetragen werden kann, wobei der Fließkanal im Trennbereich zwischen dem Gehäusegrundkörper und dem angrenzenden Gehäuseendteil mittels einer elastisch verformbaren Dichtung abgedichtet wird, wobei der Gehäusegrundkörper eine Ausnehmung mit einem Innendurchmesser aufweist, die die Dichtung und das stromaufwärtige Ende des Gehäuseendteils aufnimmt und wobei als Material für die elastische Dichtung ein Gummi der Temperaturen oberhalb von 150 °C aushält, insbesondere ein Perflourelastomer oder ein Silikongummi, verwendet wird und das stromaufwärtige Ende des Gehäusendteils auf dieser Dichtung in beliebiger Richtung kippbar gelagert ist, entsprechend dem Oberbegriff des Anspruchs 1.

### Beschreibung

Düsen zum Austrag fließfähiger Massen werden gebaut, um am Ende der Düse die Masse mit einer genau definierten Geometrie und einer gewünschten Wanddicke bzw. Wanddickenverteilung austreten zu lassen. Wenn aus der Masse Hohlprofile, wie zum Beispiel Schläuche, Rohre oder Profile hergestellt werden sollen, benötigen die Düsen einen Kern und ein Gehäuse, das den Kern umschließt. Die Fließkanalgeometrie wird vorgegeben durch die Geometrie des Gehäuses und durch die Position, die das Gehäuse relativ zum Kern besitzt. Um beispielsweise bei einem Schlauch Ungleichmäßigkeiten in den örtlichen Austrittsgeschwindigkeiten der Masse, die über dem Umfang vorhanden sind, zu beseitigen, muss unter sonst konstanten Förderbedingungen die Geometrie des Fließkanalspalts verändert werden. Dies kann bei laufendem Prozess geschehen, wenn man die Position zumindest eines Teils des Gehäuses relativ zum Kern verändern kann.

### Stand der Technik

Eine Düse der eingangs genannten Art kann auch der Druckschrift DE 4214 241 C1 entnommen werden. Dort ist eine Düse beschrieben, bei der ein Gehäuseendteil in radialer Richtung relativ zu einem Gehäusegrundkörper verlagerbar ist. Zwischen dem Gehäusegrundkörper und dem Gehäuseendteil ist ein Überbrückungsglied angeordnet, das aus einem hitzebeständigen elastischen Kunststoff besteht und den Fließkanal in dem Spaltbereich abdichtet.

Bei Runddüsen zur Herstellung von Rohren oder zum Austragen eines Vorformlings für das Extrusionsblasformen ist es Stand der Technik, beim Anfahren der Anlage die Düse durch Verschieben des Endes des Düsengehäuses mittels Zentrierschrauben, die über dem Umfang angeordnet sind, zu zentrieren (siehe W. Michaeli, Extrusionswerkzeuge für Kunststoffe und Kautschuk. Carl Hanser Verlag, München Wien, ISBN 3-446-15637-2, Seite 155, Bild 5.35 und Seite 166, Bild 5.48). Dabei wird das gesamte Düsenendteil mit Hilfe der Zentrierschrauben parallel zur Trennebene verschoben, so dass der Fließkanalspalt zwischen dem Kern und dem Düsenendteil auf der einen Seite kleiner und auf der gegenüberliegenden Seite größer wird. Auch in DE 29707060 U1 wird eine Düse für das Extrusionsblasformen beschrieben, bei der die Düsenaußenseite relativ zum Düsenkern in radialer Richtung verschoben wird. Nachteilig ist dabei, dass in der Trennebene des geteilten Gehäuses ein mehr oder weniger großer Sprung mit entsprechenden Totstellen im Fließkanal entsteht. Ebenfalls kritisch ist es, dass zum Verschieben große Radialkräfte erforderlich sind, da zum Abdichten der beiden Gehäuseteile eine hohe Axialkraft aufgebracht werden muss, und da zum Verschieben die aus den Axialkräften in der Zentrierebene resultierenden Reibkräfte überwunden werden müssen. Weiterhin ist es für viele Verfahren von Vorteil, wenn man zusätzlich auch noch das Düsenendteil in seinem Austrittsbereich deformieren kann, um so Einfluss auf lokale Bereiche der Wanddicke der Masse nehmen zu können.

Zur Wanddickenoptimierung eines schlauchförmigen Vorformlings wird beim Extrusionsblasformen für die Herstellung eines gekrümmten Schlauchs das Düsenendstück während des Austrags des Vorformlings in der Zentrierebene mittels großer Kräfte, die meist über Hydraulikkolben aufgebracht werden, verschoben (DE 29707060 U1). Durch die zyklische Verschiebung der beiden Gehäuseteile in deren Trennebene, die aus Dichtungsgründen auch noch durch große Normalkräfte aufeinandergedrückt werden, entsteht ein nicht zu vermeidender Verschleiß. In DE 19537132 C2, DE 10 2004 028 100 A1, DE 10 2004 057 974 A sowie in DE102005026726 A1 wird der Dichtbereich zwischen den beiden Gehäuseteilen mit Hilfe eines Kugelgelenks und einer kugelkalottenförmigen Lagerschale gebildet. Dabei handelt es sich allerdings um eine technisch sehr aufwendige und damit teure Lösung, bei der immer noch im Lagerbereich Verschleiß auftritt. Aufgabe der Erfindung war es nun, eine kostengünstigere Lösung für eine Zentrierung oder Relativverstellung des Düsenendstücks zu realisieren, bei der kein Verschleißproblem und auch keine Totstellen im Fließkanal mehr auftreten und bei der man zusätzlich auch noch den Austrittsbereich der Düse bei laufendem Prozess verformen kann, um den Anforderungen bezüglich der Wanddickenverteilung in der Masse, die aus der Düse ausgetragen wird, gerecht zu werden.

Diese Aufgabe wird erfindungsgemäß dadurch gelöst, dass im-Trennbereich eine enge Passung zwischen dem maximalen Außendurchmesser einer konkaven Geometrie des stromaufwärtigen Endes des Gehäuseendteils und dem im Trennbereich vorhandenen Innendurchmesser der Ausnehmung des Gehäusegrundkörpers existiert, gemäß dem Kennzeichnenden Teil des Anspruchs 1.

Vorteilhaft ist eine solche Lösung bei Düsen, mit denen ein Schlauch oder ein Profil aus einer fließfähigen Kunststoffmasse ausgetragen wird. Ganz besonders interessant ist der Einsatz einer solchen Düse zum Austrag eines Vorformlings im Bereich des Extrusionsblasformens. Dabei muss die Dichtung gegenüber einem Massedruck von mehr als 1 N/mm² insbesondere sogar mehr als 5 N/mm² sicher abdichten. Zum Abdichten des Trennbereichs der beiden Gehäuseteile eignen sich nun beispielsweise elastische Dichtungsmaterialien, wie beispielsweise Gummis insbesondere Perfluorelastomere oder Silikone, die idealer weise die Form einer Scheibe oder eines O-Rings besitzen, aber auch Federstähle in Form eines O-Rings, eines C-Rings oder auch in Form einer Tellerfeder können verwendet werden.

Zum Kippen des Endteils des Gehäuses können im einfachsten Fall Stellschrauben vorhanden sein, mit denen die relative Position des Endteils des Gehäuses zum angrenzenden feststehenden Gehäusegrundkörper veränderbar ist. Soll die Düse beim laufenden Prozess dynamisch verstellt werden, dann können automatisch ansteuerbare Stellmittel, wie zum Beispiel Dehnbolzen, Hydraulikkolben, Linearantriebe, Servomotoren, Schrittmotoren, Piezotranslatoren oder ähnliche Stellaggregate verwendet werden, mit denen die relative Position des Endteils des Gehäuses zum angrenzenden Teil des feststehenden Gehäusegrundkörpers bzw. zum feststehenden Kern während des Austrags der Masse verändert werden kann. Die verfahrenstechnischen Möglichkeiten, die eine erfindungsgemäße Düse realisiert, werden noch entscheidend erweitert, wenn das Endteil des Düsengehäuses einen verformbaren Düsenmundbereich besitzt, der über Stellschrauben oder insbesondere auch über automatisch ansteuerbare Stellmittel, wie zum Beispiel über Schrittmotoren, verstellbar ist. Damit lässt sich dann auch gezielt an einzelnen Stellen über dem Umfang des Schlauchs oder des Profils die Wanddicke verändern bzw. bei laufendem Prozess optimieren.

Unter Verwendung der erfindungsgemäßen Düse lassen sich nun vorteilhafte Verfahren realisieren, bei denen zum Optimieren des Austrittsverhaltens der Masse oder zum Optimieren der Dickenverteilung eines Schlauchs oder eines Profils der Fließkanalspalt während des Optimierens durch Kippen des Endteils des Gehäuses und oder durch Verformen des verformbaren Düsenmundbereichs des Endteils des Gehäuses mittels Stellmittel verändert wird. Besonders interessant sind Verfahren zum dynamischen Verändern der Wanddickenverteilung einer Masse, die aus einer Düse ausgetragen wird, wobei während des Austrags der Masse das Endteil des Gehäuses mittels automatischer Stellsysteme gekippt und oder wobei der Düsenmund des Endteils des Gehäuses verformt wird. Wirtschaftlich sind auch Verfahren, bei denen unter Verwendung einer erfindungsgemäßen Düse die Wanddickenverteilung einer Masse, die aus der Düse ausgetragen wird, im laufenden Prozess kontinuierlich oder zumindest in kurzen Zeitintervallen mindestens an einer Stelle gemessen wird, und bei denen die ermittelten Messwerte in einem Regler mit dem Sollwert verglichen werden, und bei denen der Regler Korrekturwerte ermittelt, mit denen das Endteil des Gehäuses der Düse mittels mindestens einem Stellmittel, das mit dem Regler verbunden ist, gezielt gekippt und oder verformt wird, um die Differenz zwischen dem Soll- und dem Istwert der Wanddicke der Masse zu verringern.

### Ausführungsbeispiel

Die Erfindung wird an Hand der schematischen Zeichnung erläutert.

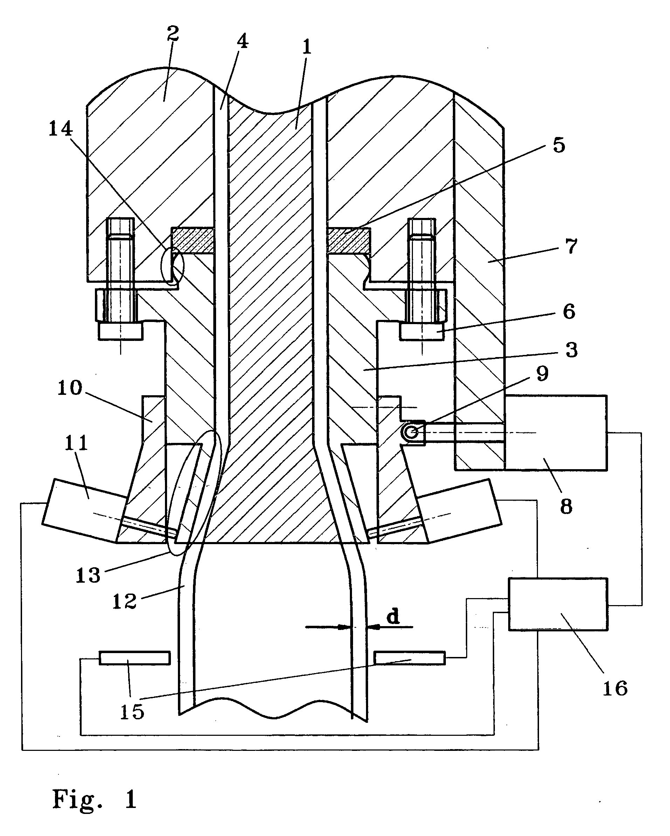

Fig. 1 zeigt eine Ausführungsform der erfindungsgemäßen Düse in einer Schnittdarstellung.

Die Düse besteht aus einem Kern (1) und einem mindestens zweigeteilten Gehäuse (2, 3) mit einem feststehenden Gehäusegrundkörper (2) und einem Gehäuseendteil (3). Der Fließkanal (4) wird im Bereich der Trennung zwischen dem feststehenden Gehäusegrundkörper (2) und dem Gehäuseendteil (3) mittels einer elastischen Dichtung (5) abgedichtet. Die dafür erforderliche Dichtkraft wird beispielsweise im einfachsten Fall über Schrauben (6), die über dem Umfang des Gehäuses angeordnet sind, aufgebracht. Über stärkeres oder weniger starkes Anziehen der Schrauben (6) kann die Dichtkraft, die im Bereich der Dichtung (5) wirkt gezielt verändert werden. Es können zum Erzeugen der Dichtkraft natürlich auch alle anderen bekannten Spannsysteme verwendet werden. Die Dichtung (5) besteht nun grundsätzlich aus einem elastischen Material, das bei weiterem Anziehen der Stellschrauben (6) elastisch nachgibt, wobei sich die Dichtkraft erhöht.

Als elastische Dichtmaterialien eigenen sich natürlich alle Materialien, die bei Erhöhung einer Kraft elastisch nachgeben. Insbesondere geeignet sind beispielsweise Gummis, die idealerweise die Form einer Scheibe oder eines O-Rrings besitzen. Für Düsen zum Verarbeiten von thermoplastischen Kunststoffen sind insbesondere Perfluorelastomere geeignet, die sowohl den Verarbeitungstemperaturen der meisten Thermoplaste standhalten, als auch eine gute Chemikalienbeständigkeit besitzen. Bei höheren Temperaturen können aber auch vorteilhaft Federstähle beispielsweise in Form von 0- oder C-Ringen oder auch in Form von Tellerfedern verwendet werden.

Auf Grund der Elastizität der Dichtung (5) kann nun das Endteil (3) des Gehäuses in beliebigen Richtungen relativ zum Gehäusegrundköper (2) und zum Kern (1) gekippt werden. Dazu ist beispielsweise eine Montageplatte (7) fest mit dem feststehenden Gehäusegrundkörper (2) verbunden. In dieser Montageplatte (7) können im einfachsten Fall Stellschrauben (6) integriert werden, die auf das Ende des Endteils (3) des Gehäuses drücken. In Fig. 1 ist nun auf der Montageplatte (7) eine Lineareinheit (8) montiert, deren Linearachse über eine Öse (9) fest mit dem kippfähigen Gehäuseendteil (3) verbunden ist. Die Öse (9) kann nun entweder direkter Bestandteil des Endteils (3) des Gehäuses oder aber, wie in Fig. 1 gezeigt, Bestandteil eines mit dem Endteil (3) des Gehäuses fest verbundenen weiteren Gehäuseteils (10) sein. Mit Hilfe der Lineareinheit (8) kann nun das Gehäuseendteil (3) mehr oder weniger gekippt werden. Prinzipiell können auch mehrere Lineareinheiten (8) über dem Unfang der Düse angeordnet werden.

Beim Kippen des Gehäuseendteils (3) wird der Spalt des Fließkanals (4) auf einer Seite kleiner, während er genau gegenüberliegend um das gleiche Maß größer wird. Die elastische Dichtung (5) gibt dabei der durch das Kippen hervorgerufenen geringfügigen Veränderung der Geometrie des abzudichtenden Spalts zwischen den beiden Gehäuseteilen (2) und (3) nach. Um eine fluchtende Montage der beiden Gehäuseteile (2 und 3) zu gewährleisten existiert im Bereich (14) eine enge Passung zwischen dem maximalen Außendurchmesser der konkaven Geometrie des Gehäuseendteils (3) und dem im Bereich (14) vorhandenen Innendurchmesser des Gehäusegrundkörpers (2). Montiert man nun Stellantriebe auf dem Gehäuseteil (10), die auf das Ende des verformbaren Düsenmundbereichs (13) des Gehäuseendteils (3) wirken, dann lässt sich der Fließkanalspalt (4) im Düsenmundbereich (13) auch noch lokal über dem Umfang dynamisch verstellen. Natürlich kann man statt Stellantrieben auch Stellschrauben verwenden, um den Spalt des Fließkanals (4) im Düsenmundbereich (13) manuell zu verstellen bzw. zu optimieren.

Die erfindungsgemäße Düse ermöglicht es nun beispielsweise bei der Herstellung von Blasfolien oder bei der Rohrherstellung erstmals auch Verfahren zu benutzen, bei denen sowohl unsymmetrische Wanddickenunterschiede über dem Umfang der Folienblase oder des Rohres als auch exzentrische Dickenunterschiede bei laufender Anlage feinfühlig reduziert werden können. Da sich Düsen mit elastischen Kippgelenken in einfacher Weise auch über automatisch ansteuerbare Aktuatoren verstellen lassen, können auch Blasfolien oder Rohre in idealer Weise dickengeregelt hergestellt werden. Zur Zeit müssen beispielsweise bei der Herstellung von Blasfolien, mangels einer verfügbaren Lösung, auch exzentrische Dickenunterschiede, die in der Folienblase vorhanden sind, durch eine lokale Beeinflussung der Wanddicke bekämpft werden. Dies hat zur Folge, dass deutlich größere Dickenabweichungen ausgeregelt werden müssen, als wenn man die exzentrischen Dickenunterschiede, durch eine Relativverstellung der Düse zum Dorn auch automatisch bekämpfen könnte.

Somit lassen sich unter Verwendung erfindungsgemäßer Düsen erstmals Verfahren zum Austragen einer Masse (12) oder zum Optimieren der Dickenverteilung einer Masse (12) einsetzen, wobei die Masse (12) aus einer Düse ausgetragen wird, die aus einem Kern (1) und einem mindestens zweigeteilten Gehäuse (2, 3), umfassend einen feststehenden Gehäusegrundkörper (2) und einem Endteil des Gehäuses (3), an dem die fließfähige Masse (12) die Düse verlässt, besteht, wobei das Gehäuse (2, 3) den Kern (1) so umschließt, dass zwischen Kern (1) und Gehäuse (2,3) ein Fließkanal (4) vorhanden ist, durch den die fließfähige Masse (12) ausgetragen wird, und wobei mittels einer über Schrauben (6) oder Aktuatoren (8) erzeugten Veränderung des lokalen Anpressdrucks die Geometrie einer elastischen Dichtung (5), die sich zwischen einem feststehenden Gehäusegrundkörper (2) und einem Endteil des Gehäuses (3) befindet, verändert wird und dass damit über die Veränderung des Fließkanals (4) zwischen dem Endteil des Gehäuses (3) und dem Kern (1) gleichzeitig auch die Dickenverteilung der Masse (12) verändert wird. Mit einem solchen Verfahren erreicht man nicht nur eine schnellere Regelung, sondern auch geringere verbleibende Dickentoleranzen.

Dazu misst mindestens ein Dickenmesssensor (15) die Istwanddicke (d) der Masse (12) an mindestens einer Stelle hinter der Düse. Vorteilhaft ist es allerdings, wenn mehrere Dickenmesssensoren (15) die Istwanddicke (d) an mehreren Stellen über dem Umfang der ausgetragenen Masse (12) messen. Auf diese Weise können dann insbesondere auch exzentrische Dickenunterschiede detektiert werden. Die von den Dickenmesssensoren (15) ermittelten Istwerte der Dicke (d) werden einem Regler (16) zugeführt, in dem diese mit den vorgegebenen Sollwerten verglichen werden. Entsprechend der Differenz der Dickenwerte ermittelt der Regler (16) dann Stellgrößen, mit denen die Lineareinheit (8) verstellt wird, um die exzentrischen Dickenunterschiede zu reduzieren. In gleicher Weise werden im Regler (16) auch Stellgrößen ermittelt und an die Stellmittel (11) gesendet, die über dem Umfang der Düse angeordnet sind, um die unsymmetrischen Dickenabweichungen von den vorgegebenen Sollwerten zu verringern. Die Ansteuerung der Stellmittel (8 und 11) kann nacheinander oder auch gleichzeitig erfolgen, wichtig ist aber, dass mit Hilfe der Stellmittel (8 und 11) sowohl die unsymmetrischen als auch die exzentrischen Dickenunterschiede ausgeregelt werden. Auf diese Weise können an jeder Stelle minimale Abweichungen der Istwanddicke (d) der Masse (12) von der vorgegebenen Sollwanddicke erreicht werden.

## Patentansprüche

1. Düse für einen Extruder bestehend aus einem Kern (1) und einem mindestens zweigeteilten Gehäuse (2, 3), umfassend einen feststehenden Gehäusegrundkörper (2) und ein Gehäuseendteil (3), an dem die fließfähige Masse (12) die Düse verlässt, wobei das Gehäuse (2,3) den Kern (1) so umschließt, dass zwischen Kern (1) und Gehäuse (2, 3) ein Fließkanal (4) vorhanden ist, durch den eine fließfähige Masse (12) ausgetragen werden kann, wobei der Fließkanal (4) im Trennbereich zwischen dem Gehäusegrundkörper (2) und dem angrenzenden Gehäuseendteil (3) mittels einer elastisch verformbaren Dichtung (5) abgedichtet wird, wobei der Gehäusegrundkörper (2) eine Ausnehmung mit einem Innendurchmesser aufweist, die die Dichtung (5) und das stromaufwärtige Ende des Gehäuseendteils (3) aufnimmt und wobei als Material für die elastische Dichtung (5) ein Gummi, der Temperaturen oberhalb von 150°C aushält, insbesondere ein Perfluorelastomer oder ein Silikongummi, verwendet wird und das stromaufwärtige Ende des Gehäuseendteils auf dieser Dichtung (5) in beliebiger Richtung kippbar gelagert ist, **dadurch gekennzeichnet, dass** im Trennbereich (14) eine enge Passung zwischen dem maximalen Außendurchmesser einer konkaven Geometrie des stromaufwärtigen Endes des Gehäuseendteils (3) und dem im Trennbereich (14) vorhandenen Innendurchmesser der Ausnehmung des Gehäusegrundkörpers (2) existiert.

2. Düse nach Anspruch 1, **dadurch gekennzeichnet, dass** es sich bei der Düse um eine Schlauchdüse oder eine Profildüse handelt.

3. Düse nach einem der vorgenannten Ansprüche, **dadurch gekennzeichnet, dass** die Dichtung (5) die Form einer Scheibe eines O-Rings, eines C-Rings oder aber die Form einer Tellerfeder besitzt.

4. Düse nach einem der vorgenannten Ansprüche, **dadurch gekennzeichnet, dass** der Druck im Fließkanal (4) im Bereich der Dichtung (5) größer als 1 N/mm², vorzugsweise sogar größer als 5 N/mm² sein kann.

5. Düse nach einem der vorgenannten Ansprüche, **dadurch gekennzeichnet, dass** zum Kippen des Endteils des Gehäuses (3) Stellschrauben vorhanden sind, mit denen die relative Position des Endteils (3) des Gehäuses zum angrenzenden Teil des Gehäusegrundkörpers (2) veränderbar ist.

6. Düse nach einem der vorgenannten Ansprüche, **dadurch gekennzeichnet, dass** zum Kippen des Endteils des Gehäuses (3) automatisch ansteuerbare Stellmittel (8) insbesondere Schrittmotoren vorhanden sind, mit denen die relative Position des Endteils des Gehäuses (3) zum angrenzenden Teil des Gehäusegrundkörpers (2) während des Austrags der Masse (12) veränderbar ist.

7. Düse nach einem der vorgenannten Ansprüche, **dadurch gekennzeichnet, dass** das Endteil des Gehäuses (3) einen verformbaren Düsenmundbereich (13) besitzt, der über Stellschrauben oder insbesondere auch über automatisch ansteuerbare Stellmittel (11), insbesondere über Schrittmotoren, verstellbar ist.

8. Verfahren zum Austragen einer Masse (12) oder zum Optimieren der Dickenverteilung einer Masse (12) wobei die Masse (12) aus einer Düse ausgetragen wird, die aus einem Kern (1) und einem mindestens zweigeteilten Gehäuse (2, 3), umfassend einen feststehenden Gehäusegrundkörper (2) und einem Gehäuseendteil (3), an dem die fließfähige Masse (12) die Düse verlässt, besteht wobei das Gehäuse (2, 3) den Kern (1) so umschließt, dass zwischen Kern (1) und Gehäuse (2, 3) ein Fließkanal (4) vorhanden ist, durch den die fließfähige Masse (12) ausgetragen wird, wobei der Gehäusegrundkörper (2) eine Ausnehmung mit einem Innendurchmesser aufweist, die die Dichtung (5) und das stromaufwärtige Ende des Gehäuseendteils (3) aufnimmt, wobei mittels einer über Schrauben (6) oder Aktuatoren (8) erzeugten Veränderung des lokalen Anpressdrucks die Geometrie einer elastischen Dichtung (5), die sich zwischen einem feststehenden Gehäusegrundkörper (2) und dem kippbar gelagerten Gehäuseendteil (3) befindet, verändert wird, und wobei somit über die Veränderung des Fließkanals (4) zwischen dem Gehäuseendteil (3) und dem Kern (1) gleichzeitig auch die Dickenverteilung der Masse (12) verändert wird, **dadurch gekennzeichnet, dass** um eine fluchtende Montage der beiden Gehäuseteile (2, 3) zu gewährleisten, im Trennbereich (14) eine enge Passung zwischen dem maximalen Außendurchmesser der konkaven Geometrie des stromaufwärtigen Endes des Gehäuseendteils (3) und dem im Trennbereich (14) vorhandenen Innendurchmesser der Ausnehmung des Gehäusegrundkörpers (2) existiert.

9. Verfahren nach Anspruch 8, **dadurch gekennzeichnet, dass** zur Optimierung der Dicke (d) bei laufendem Prozess sowohl die Geometrie des Fließkanals (4) im verformbaren Düsenmundbereich (13) lokal begrenzt mittels Aktuatoren (11) als auch der Fließkanal (4) über seinen gesamten Umfang durch die Deformation einer elastischen Dichtung (5) mittels Aktuatoren (8) unabhängig voneinander gleichzeitig oder auch nacheinander verstellt werden.

10. Verfahren nach Anspruch 8 oder 9 zum Regeln der Wanddicke einer Masse (12), die aus einer Düse ausgetragen wird, **dadurch gekennzeichnet, dass** bei laufendem Prozess die Dickenverteilung einer Masse (12), die aus einer Düse ausgetragen wird kontinuierlich oder zumindest in kurzen Zeitintervallen mindestens an einer Stelle mittels Sensoren (15) gemessen wird, und dass die ermittelte Istwanddicke (d) in einem Regler (16) mit dem Sollwert verglichen wird, und dass der Regler (16) Korrekturwerte ermittelt, mit denen das Endteil des Gehäuses (3) mittels mindestens einem Stellmittel (8 oder 11), das mit dem Regler (16) verbunden ist, gezielt gekippt und oder verformt wird, um die Differenz zwischen dem Soll- und dem Istwert der Wanddicke (d) zu verringern.

11. Verfahren nach Anspruch 8 bis 10 zum Regeln der Wanddicke (d) einer Masse, die aus einer Düse ausgetragen wird, **dadurch gekennzeichnet, dass** exzentrische Dickenunterschiede und unsymmetrische Dickenunterschiede mittels eigener getrennter oder auch miteinander verknüpfter Regelkreise ausgeregelt werden.

## Claims

1. Nozzle for an extruder, composed of a core (1) and a housing (2, 3) which is in at least two parts and comprises a stationary housing main body (2) and a housing end part (3) at which the flowable compound (12) exits the nozzle, wherein the housing (2, 3) encloses the core (1) such that a flow duct (4) through which a flowable compound (12) can be delivered is present between the core (1) and the housing (2, 3), wherein the flow duct (4) in the separation region between the housing main body (2) and the adjoining housing end part (3) is sealed by means of an elastically deformable seal (5), wherein the housing main body (2) includes a clearance having an inner diameter which receives the seal (5) and the upstream end of the housing end part (3), and wherein a rubber which is resistant to temperatures in excess of 150°, in particular a perfluoro elastomer or a silicone rubber, is used as a material for the elastic seal (5), and the upstream end of the housing end part is mounted on this seal (5) so as to be tiltable in any arbitrary direction, **characterized in that** in the separation region (14) a tight fit exists between the maximum outer diameter of a concave geometry of the upstream end of the housing end part (3) and the inner diameter of the clearance of the housing main body (2), which is present in the separation region (14).

2. Nozzle according to Claim 1, **characterized in that** the nozzle is a tube nozzle or a profile nozzle.

3. Nozzle according to one of the preceding claims, **characterized in that** the seal (5) has the shape of a disc of an O-ring, of a C-ring, or else the shape of a disc spring.

4. Nozzle according to one of the preceding claims, **characterized in that** the pressure in the flow duct (4) in the region of the seal (5) may be greater than 1 N/mm², preferably even greater than 5 N/mm².

5. Nozzle according to one of the preceding claims, **characterized in that** set screws are present for tilting the end part (3) of the housing, by way of which set screws the relative position of the end part (3) of the housing in relation to the adjoining part of the housing main body (3) is adjustable.

6. Nozzle according to one of the preceding claims, **characterized in that** automatically controllable actuating means (8), in particular stepper motors, are present for tilting the end part (3) of the housing, by way of which actuating means (8) the relative position of the end part (3) of the housing in relation to the adjoining part of the housing main body (2) is adjustable during delivery of the compound (12).

7. Nozzle according to one of the preceding claims, **characterized in that** the end part (3) of the housing has a deformable nozzle-mouth region (13) which is adjustable by way of set screws or else, in particular, by way of automatically controllable actuating means (11), in particular by way of stepper motors.

8. Method for delivery of a compound (12) or for optimizing the thickness distribution of a compound (12), wherein the compound (12) is delivered by a nozzle which is composed of a core (1) and a housing (2, 3) which is in at least two parts and comprises a stationary housing main body (2) and a housing end part (3) at which the flowable compound (12) exits the nozzle, wherein the housing (2, 3) encloses the core (1) such that a flow duct (4) through which the flowable compound (12) is delivered is present between the core (1) and the housing (2, 3), wherein the housing main body (2) includes a clearance having an inner diameter which receives the seal (5) and the upstream end of the housing end part (3), wherein by means of a modification of the local contact pressure, which is produced by way of screws (6) or actuators (8), the geometry of an elastic seal (5), which is situated between a stationary housing main body (2) and the housing end part (3) which is mounted so as to be tiltable, is modified, and wherein by way of the modification of the flow duct (4) between the housing end part (3) and the core (1) the thickness distribution of the compound (12) is thus simultaneously also modified, **characterized in that** in order to ensure an aligned assembly of the two housing parts (2, 3), in the separation region (14) a tight fit exists between the maximum outer diameter of the concave geometry of the upstream end of the housing end part (3) and the inner diameter of the clearance of the housing main body (2), which is present in the separation region (14).

9. Method according to Claim 8, **characterized in that**, for optimizing the thickness (d) in the running process, both the geometry of the flow duct (4) in the deformable nozzle-mouth region (13), limited in a localized manner by means of actuators (11), and the flow duct (4) over its entire circumference, are adjusted simultaneously and independently of one another or else successively by way of the deformation of an elastic seal (5) by means of actuators (8).

10. Method according to Claim 8 or 9 for controlling the wall thickness of a compound (12) which is delivered from a nozzle, **characterized in that** in the running process the thickness distribution of a compound (12) which is delivered from a nozzle is continuously or at least in short intervals measured by means of sensors (15) at at least one point, and **in that** the detected actual wall thickness (d) is compared with the nominal value in a controller (16), and **in that** in order to reduce the difference between the nominal value and the actual value of the wall thickness (d), the controller (16) determines correction values by way of which the end part (3) of the housing is tilted and/or deformed in a targeted manner by means of at least one actuating means (8 or 11) which is connected to the controller (16).

11. Method according to Claims 8 to 10 for controlling the wall thickness (d) of a compound which is delivered from a nozzle, **characterized in that** eccentric thickness differentials and asymmetric thickness differentials are controlled by means of dedicated separate or else interlinked control loops.

## Revendications

1. Buse pour une extrudeuse, constituée d'une partie centrale (1) et d'un boîtier (2, 3) au moins en deux parties, comportant un corps de base de boîtier fixe (2) et une partie d'extrémité de boîtier (3), au niveau de laquelle la matière coulante (12) sort de la buse, le boîtier (2, 3) entourant la partie centrale (1) de telle sorte qu'un canal d'écoulement (4) soit présent entre la partie centrale (1) et le boîtier (2, 3), au moyen duquel canal d'écoulement une matière coulante (12) peut être évacuée, le canal d'écoulement (4) étant, dans la région de séparation entre le corps de base de boîtier (2) et la partie d'extrémité de boîtier adjacente (3), étanchéifié au moyen d'un joint d'étanchéité (5) déformable élastiquement, le corps de base de boîtier (2) comprenant un évidement présentant un diamètre intérieur qui reçoit le joint d'étanchéité (5) et l'extrémité amont de la partie d'extrémité de boîtier (3), et un caoutchouc qui résiste à des températures supérieures à 150 °C, en particulier un élastomère perfluorique ou un caoutchouc de silicone, étant utilisé en tant que matériau pour le joint d'étanchéité (5) élastique, et l'extrémité amont de la partie d'extrémité de boîtier étant montée sur ce joint d'étanchéité (5) de manière à pouvoir basculer dans n'importe quelle direction, **caractérisée en ce qu'**il existe dans la région de séparation (14) un ajustement serré entre le diamètre extérieur maximal d'une géométrie concave de l'extrémité amont de la partie d'extrémité de boîtier (3) et le diamètre intérieur, présent dans la région de séparation (14), de l'évidement du corps de base de boîtier (2).

2. Buse selon la revendication 1, **caractérisée en ce que** la buse est une buse de tuyau ou une buse de profilage.

3. Buse selon l'une quelconque des revendications précédentes, **caractérisée en ce que** le joint d'étanchéité (5) présente la forme d'un disque, d'un joint torique, d'un anneau en C ou encore la forme d'une rondelle-ressort.

4. Buse selon l'une quelconque des revendications précédentes, **caractérisée en ce que** la pression dans le canal d'écoulement (4) dans la région du joint d'étanchéité (5) peut être supérieure à 1 N/mm², et même de préférence supérieure à 5 N/mm².

5. Buse selon l'une quelconque des revendications précédentes, **caractérisée en ce que** des vis de réglage sont présentes pour le basculement de la partie d'extrémité du boîtier (3), à l'aide desquelles la position relative de la partie d'extrémité (3) du boîtier par rapport à la partie adjacente du corps de base de boîtier (2) peut être modifiée.

6. Buse selon l'une quelconque des revendications précédentes, **caractérisée en ce que** des moyens de réglage (8) pouvant être commandés automatiquement, en particulier des moteurs pas à pas, sont présents pour le basculement de la partie d'extrémité du boîtier (3), à l'aide desquels la position relative de la partie d'extrémité du boîtier (3) par rapport à la partie adjacente du corps de base de boîtier (2) peut être modifiée pendant l'évacuation de la matière (12).

7. Buse selon l'une quelconque des revendications précédentes, **caractérisée en ce que** la partie d'extrémité du boîtier (3) présente une région d'embouchure de buse déformable (13) qui peut être réglée par le biais de vis de réglage ou encore en particulier par le biais de moyens de réglage (11) pouvant être commandés automatiquement, en particulier par le biais de moteurs pas à pas.

8. Procédé d'évacuation d'une matière (12) ou d'optimisation de la distribution d'épaisseur d'une matière (12), la matière (12) étant évacuée d'une buse qui est constituée d'une partie centrale (1) et d'un boîtier (2, 3) au moins en deux parties, comportant un corps de base de boîtier fixe (2) et une partie d'extrémité de boîtier (3), au niveau de laquelle la matière coulante (12) sort de la buse, le boîtier (2, 3) entourant la partie centrale (1) de telle sorte qu'un canal d'écoulement (4) soit présent entre la partie centrale (1) et le boîtier (2, 3), au moyen duquel canal d'écoulement la matière coulante (12) est évacuée, le corps de base de boîtier (2) comprenant un évidement présentant un diamètre intérieur qui reçoit le joint d'étanchéité (5) et l'extrémité amont de la partie d'extrémité de boîtier (3), la géométrie d'un joint d'étanchéité (5) élastique qui se trouve entre un corps de base de boîtier fixe (2) et la partie d'extrémité de boîtier (3) montée de manière basculante étant modifiée au moyen d'une modification, générée par le biais de vis (6) ou d'actionneurs (8), de la pression d'appui locale et, par le biais de la modification du canal d'écoulement (4) entre la partie d'extrémité de boîtier (3) et la partie centrale (1), la distribution d'épaisseur de la matière (12) étant également par conséquent modifiée en même temps, **caractérisé en ce qu'**afin d'assurer un montage en alignement des deux parties de boîtier (2, 3), il existe dans la région de séparation (14) un ajustement serré entre le diamètre extérieur maximal de la géométrie concave de l'extrémité amont de la partie d'extrémité de boîtier (3) et le diamètre intérieur, présent dans la région de séparation (14), de l'évidement du corps de base de boîtier (2).

9. Procédé selon la revendication 8, **caractérisé en ce que**, pour optimiser l'épaisseur (d) au cours du processus, on règle indépendamment l'un de l'autre en même temps ou alors l'un après l'autre non seulement la géométrie du canal d'écoulement (4) dans la région d'embouchure de buse déformable (13), de manière limitée localement au moyen d'actionneurs (11), mais aussi le canal d'écoulement (4) sur toute sa périphérie, au moyen de la déformation d'un joint d'étanchéité (5) élastique au moyen d'actionneurs (8).

10. Procédé selon la revendication 8 ou 9 pour réguler l'épaisseur de paroi d'une matière (12) qui est évacuée d'une buse, **caractérisé en ce qu'**au cours du processus, la distribution d'épaisseur d'une matière (12) qui est évacuée d'une buse est mesurée au moins en un point au moyen de capteurs (15), en continu ou au moins à des intervalles de temps courts, et **en ce que** l'épaisseur de paroi réelle (d) déterminée est comparée à la valeur de consigne dans un régulateur (16), et **en ce que** le régulateur (16) détermine des valeurs de correction avec lesquelles la partie d'extrémité du boîtier (3) est basculée et/ou déformée de manière ciblée au moyen d'au moins un moyen de réglage (8 ou 11) qui est connecté au régulateur (16), afin de réduire la différence entre la valeur de consigne et la valeur réelle de l'épaisseur de paroi (d).

11. Procédé selon les revendications 8 à 10, pour réguler l'épaisseur de paroi (d) d'une matière qui est évacuée d'une buse, **caractérisé en ce que** des différences d'épaisseur excentriques et des différences d'épaisseur asymétriques sont régulées au moyen de circuits de régulation propres séparés ou encore combinés les uns avec les autres.
